# EUROPEAN PATENT APPLICATION

(11) **EP 3 549 487 A1**
(43) Date of publication of application: **09.10.2019**
(21) Application number: 19382249.1
(22) Date of filing: 04.04.2019
(51) Int. Cl.: A47C 1/12, A47C 7/00

(54) **MOBILE SUPPORT FOR SEATS**

(30) Priority: 04.04.2018 ES 201830335
(71) Applicant: Figueras Seating Solutions, S.L., 08186 Llica d'Amunt (Barcelona) (ES)
(72) Inventor: BORRAS PONS, Pablo, 08186 Llica d'Amunt (Barcelona) (ES)
(74) Representative: Herrero & Asociados, S.L.

(57) **Abstract**

The invention relates to a mobile support for seats (1) comprising a support bar (2) for the seats (1) which has feet (3) for resting and moving on a floor (4) of the installation site of the seats (1), wherein each foot (3) comprises a casing (5) which in the lower portion incorporates anti-slip blocks (6), while inside of said casing (5) an articulated structure (7) is arranged provided with wheels (8) which can tilt between an upper position wherein they stay above the bearing level of the anti-slip blocks (6) and a lower position wherein the wheels (8) stay with a bearing point below the bearing level of the anti-slip blocks (6) for movement by rolling on the ground (4).

## Description

### Technical field

The present invention relates to the seats which are arranged in venues in a movable way in order to enable the seats to be adapted depending on the activities to be held in the venue, the invention proposing a mobile support for the seats, with which advantages are achieved, both in the installation and the positioning of the seats.

### State of the art

There are venues intended to be used occasionally for different activities, such that in some cases it is required that the surface be free of obstacles, for example, for playing sports, while in other cases an arrangement of chairs is required in order to be occupied by spectators or attendees of a show, conference or similar event; which requires said venues to be able to be transformed by arranging and removing chairs.

To do so, the most traditional solution is the use of chairs, generally folding, which are placed and removed depending on the event to be held, this practice being very laborious due to the work that the placement and removal of the chairs requires, as well as the storage thereof, in addition to the fact that the chairs used in these cases are not very comfortable.

Consequently, solutions for installing seats by means of mobile assembly systems have been developed, such that the seats can be moved between a collected position in storage, leaving the surface of the venue free, and an unfolded position wherein the seats are distributed in the venue in order to be used. See for example documents EP1864593B1, EP2014194B1 of the same applicant as the present invention.

However, in these conventional solutions, the seats are arranged on moving guides, which requires a complex installation, due to the necessary incorporation of the guides for moving the seats on the floor of the venue and of the means necessary for covering the guides when the floor needs to be left free for other activities.

Moreover, in those conventional solutions, in order for the seats to remain stable in the position of use thereof, locking solutions are needed which act together with the movement means, which complicates the embodiment of the movement means.

### Object of the Invention

According to the present invention, a mobile support for seats is proposed which comprises a support beam for the seats, the support beam being incorporated on movable feet on the floor of the installation site of the seats, obtaining with the mobile support of the invention characteristics which improve the function of the mobility of the seats, while simplifying the practical assembly and the installation cost.

The foot comprises a casing which in the lower portion is provided with anti-slip blocks for resting on the floor, an articulated structure carrying wheels being housed in the casing and which can tilt between an upper position wherein the bearing point thereof is above the bearing level of the anti-slip blocks and a lower position wherein the bearing point of said wheels is below the bearing level of the anti-slip blocks.

Thus, a foot is obtained which enables, by means of tilting the wheels, it to rest in a rolling manner in order to move the seats, or rest in a fixed manner with the anti-slip blocks, in order to leave the seats static and stable in the placement site; without sliding guides for the movements or locking means to ensure the static positioning being necessary for that purpose.

According to one embodiment, the articulated structure wherein the wheels are incorporated is made up of two connecting rods, each one provided with, at least, one wheel, said connecting rods being joined in a joint to the casing of the foot and connected to each other by means of a brace, while one of the connecting rods has a bushing wherein a lever bar can fit to actuate a change in position of the articulated structure between the upper and lower placement positions of the wheels.

In this way it results in an embodiment that is very simple and can be easily actuated for arranging the foot in the movement position and in the static position for the mobility and anchoring of the seats in the installation sites.

Preferably, the joint between each foot and the support bar is established by means of a rotating coupling which enables the directional orientation of the foot for the movements.

The coupling of the foot with respect to the support beam of the seats is foreseen as being made up of a vertical tubular housing incorporated in the upper portion of the casing of the foot and a corresponding cylindrical rod incorporated in the lower portion of the support beam of the seats, with horizontal contact surfaces between both portions, between which at least one elastic ball lock is included which enables the anchoring to be ensured between said surfaces in several relative rotation positions therebetween.

Thus, an embodiment is obtained which is simple and can be easily handled to adapt the foot to different movement directions, enabling the seats to be easily moved to the sites of interest in the installation.

In light of this, the support of the invention results in characteristics which are very advantageous for the application for which it is intended, taking on a life of its own and preferred character with respect to conventional solutions with the same function.

### Description of the figures

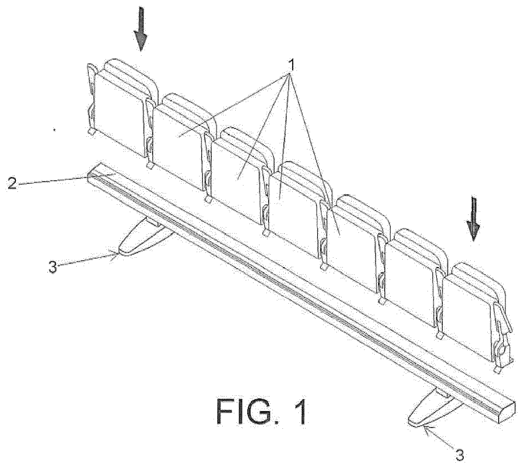

Figure 1 shows a perspective view of an exemplary embodiment of the mobile support for seats of the invention, the seats being raised with respect to the assembly position on the support beam.
Figure 2 is a plan view of an arrangement of seats on an installation surface.
Figure 3 is a plan view of the previous installation with the seats collected in a storage area.
Figure 4 is a cross-sectional side view of one of the feet of the mobile support for seats, according to the invention, in the static support position of the foot with the anti-slip blocks.
Figure 5 is a view like that of the previous figure, with the foot supported in the rolling position by means of the movement wheels.

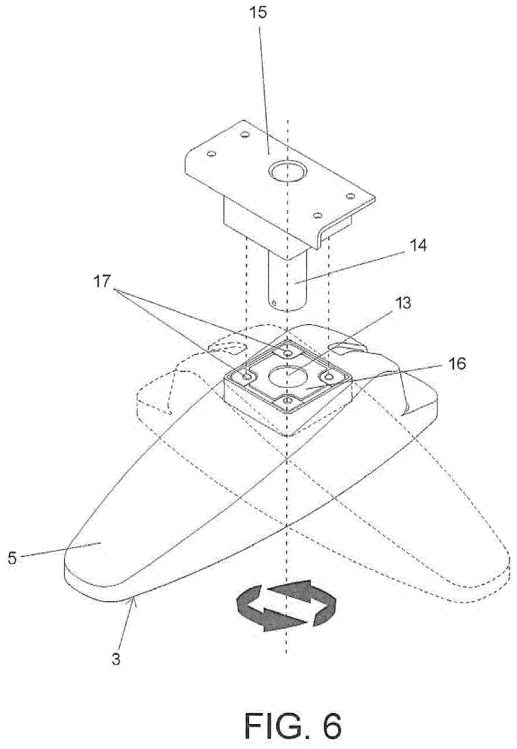

Figure 6 is a perspective view of one of the feet of the mobile support, the rotation coupling being shown which enables the movement direction to be oriented.

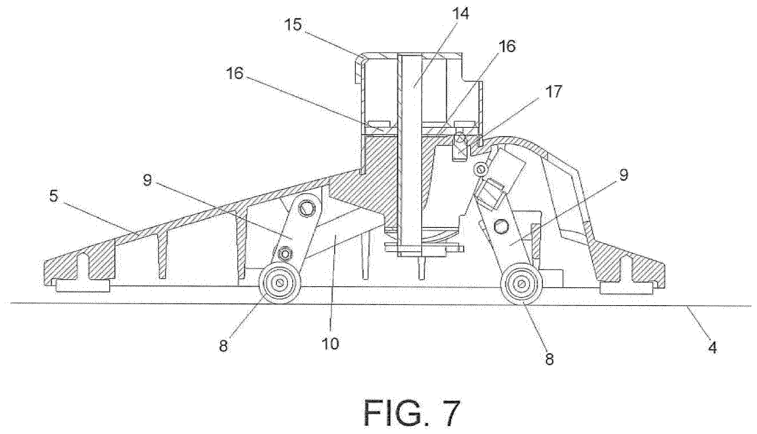

Figure 7 is a cross-sectional side view of one of the feet of the mobile support incorporating the rotation coupling for orienting the movement.
Figure 8 is a plan view of two mobile supports for seats, representing the possibility of rotational movement in the position thereof.
Figure 9 is a plan view of two mobile supports for seats, representing the possibility of movement in the transverse direction.
Figure 10 is a plan view of a mobile support for seats, representing the possibility of movement in the longitudinal direction.

### Detailed description of the invention

The object of the invention relates to a mobile support for seats (1) which enables the movement of the seats (1) for the distribution or collection thereof on the surface whereon they are installed. The mobile support comprises a support bar (2) whereon the seats (1) are arranged, the support bar (2) being mounted on feet (3) for resting and moving on the floor (4) of the installation site.

Each foot (3) comprises, according to the invention, a casing (5), which in the lower portion thereof incorporates anti-slip blocks (6), with which it can rest on the floor (4), while inside of said casing (5) an articulated structure (7) is arranged, which incorporates wheels (8) which can tilt between an upper position and a lower position, such that in the upper position the bearing point of said wheels (8) is above the bearing level of the anti-slip blocks (6), while in the lower position the bearing point of the aforementioned wheels (8) is below the bearing level of the anti-slip blocks (6).

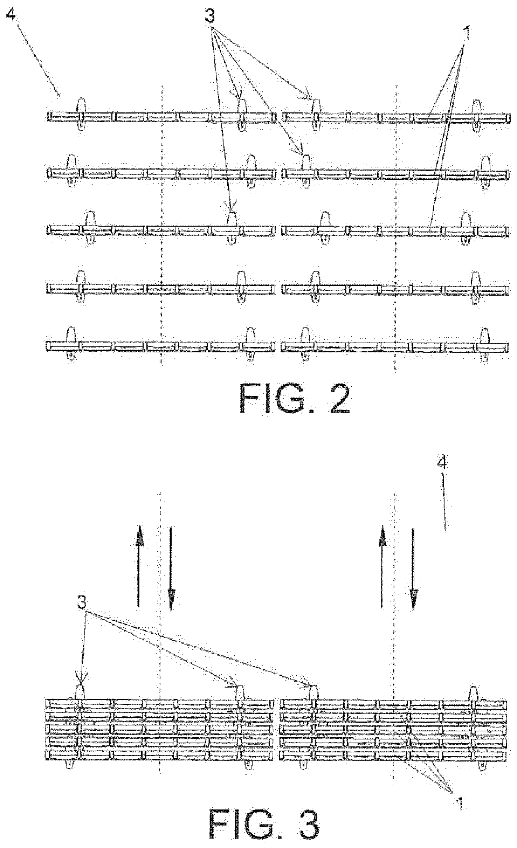

It is envisaged that the support bar (2) is incorporated on, at least, two feet (3), with which it rests on the floor (4) of the installation site, such that by tilting the wheels (8) of the feet (3) to the lower position, said feet (3) stay resting on the floor (4) by means of the wheels (8) thereof being able to move the seats (1) by rolling in order to place it in the positions of interest, whether it be in distribution or in collection on the floor (4) of the installation site, as seen in Figures 2 and 3.

Once the seats (1) are located in the site of interest, by tilting the wheels (8) of the feet (3) to the upper position, the feet (3) stay resting on the floor (4) by means of the anti-slip blocks (6), with which the seats (1) are kept in a static position for use or in storage.

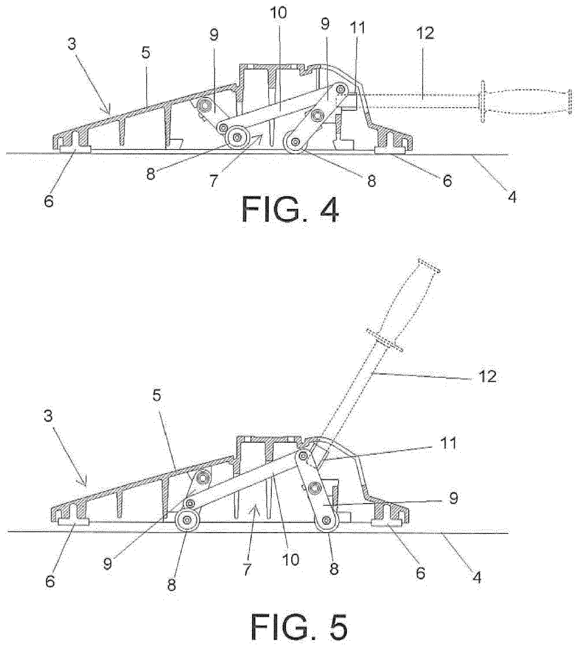

According to a practical embodiment, the articulated structure (7) is made up of two connecting rods (9), wherein the wheels (8) are incorporated, said connecting rods (9) being joined in a joint to the casing (5) and connected to each other by means of a brace (10), making up an articulated quadrilateral, while one of the aforementioned connecting rods (9) incorporates a bushing (11) fixed therein, wherein a lever bar (12) can be inserted in order to move the articulated structure (7) between the two situational positions of the wheels (8), as seen in Figures 4 and 5.

Moreover, the joint between each foot (3) and the support bar (2) is established by means of a rotating coupling which enables the foot (3) to be oriented in the direction desired for the movement of the seats (1).

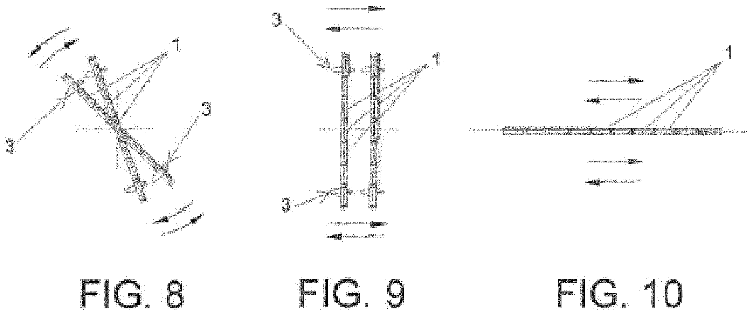

According to a practical embodiment, said rotating coupling is made up of a vertical tubular housing (13) established in the upper portion of the casing (5) of each foot (3) and a corresponding cylindrical rod (14), joined by means of a support (15) to the support bar (2), such that the assembly of the seats (1) on the feet (3) is established by means of insertion by fitting the cylindrical rods (14) joined to the support bar (2) into the tubular housings (13) of the feet (3), with which the feet (3) have the possibility of rotation in the assembly of the seats (1), thus enabling the movement of the seats (1) to be oriented in different directions of movement, as seen in Figures 8, 9 and 10.

Between the securing support (15) of the cylindrical rod (14) on the support bar (2) and the housing (13) for insertion defined in the respective foot (3), a rotating support is established by means of corresponding horizontal panels (16) in contact with each other, between which one or more ball retainers (17) which establish an elastic locking between said panels (16) act, enabling the relative position thereof to be ensured in different angles of rotation, without impeding the change in position from one angle of rotation to another.

In any case, the arrangement of the housings (13) defined in the feet (3) and the cylindrical rods (14) secured in the support bar (2) is not limiting, it being able to be the opposite without altering the functional nature of the rotating assembly for the orientation of the movement of the seats (1) according to the invention.

## Claims

1. A mobile support for seats (1), comprising a support bar (2) for the seats (1) which has feet (3) for resting and moving on a floor (4) of the installation site of the seats (1), **characterised in that** each foot (3) comprises a casing (5) which in the lower portion incorporates anti-slip blocks (6), while inside of said casing (5) an articulated structure (7) is arranged provided with wheels (8) which can tilt between an upper position wherein they stay above the bearing level of the anti-slip blocks (6) and a lower position wherein the wheels (8) stay with a bearing point below the bearing level of the anti-slip blocks (6) for a movement by rolling on the ground (4).

2. The mobile support for seats (1), according to claim 1, **characterised in that** the articulated structure (7) is made up of two connecting rods (9), wherein the wheels (8) are incorporated, the connecting rods (8) being joined in a joint to the casing (5) and connected to each other by means of a brace (10), making up an articulated quadrilateral, a bushing (11) being fastened in one of the connecting rods (9) for fitting a lever bar (12) which enables the movement of the articulated structure (7) between the two situational positions of the wheels (8) to be actuated.

3. The mobile support for seats (1), according to any one of the preceding claims, **characterised in that** the joint between each foot (3) and the support bar (2) of the seats (1) is established by means of a rotating coupling which enables the directional orientation of the foot (3) for the movements.

4. The mobile support for seats (1), according to the previous claim, **characterised in that** the rotating coupling between each foot (3) and the support bar (2) comprises a tubular housing (13) established in the upper portion of the casing (5) and a corresponding cylindrical rod (14) which is joined by means of a support (15) to the support bar (2), wherein between the support (15) and the tubular housing (13) horizontal panels (16) are arranged in contact with each other and between which one or more ball retainers (17) act.
